# EUROPEAN PATENT APPLICATION

(11) **EP 3 128 467 A1**
(43) Date of publication of application: **08.02.2017**
(21) Application number: 16165998.2
(22) Date of filing: 19.04.2016
(51) Int. Cl.: G06Q 10/00, G06Q 30/00

(54) **MOBILE TERMINAL AND METHOD FOR CONTROLLING THE SAME**

(30) Priority: 06.08.2015 KR 20150110984
(71) Applicant: LG Electronics Inc., Seoul 07336 (KR)
(72) Inventor: PARK, Jiyoung, 06772 Seoul (KR); CHI, Jumin, 06772 Seoul (KR)
(74) Representative: Ter Meer Steinmeister & Partner

(57) **Abstract**

A mobile terminal (100) includes a touchscreen (151), a memory (170) configured to store a plurality of payment items, and a controller (180). The controller (180) causes the touchscreen to display a list of the plurality of payment items stored in the memory and switches the displaying of a first payment item of the list to display a first display object in response to a received user input, where the first display object includes tag information that corresponds to tag information of the first payment item.

## Description

### Field of the Invention

The present invention relates to a mobile terminal enabling a user to more conveniently use the mobile terminal and a method of controlling therefor.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

When payment is made by a credit card, a user can receive information on the payment via a text message, data communication or the like. If payment is made by a payment function located at the mobile terminal itself, the mobile terminal generates a corresponding payment event and may be able to store the event in the mobile terminal.

Yet, the received payment information or the directly generated and stored payment information is outputted by a simple list in general. It is often inconvenient for a user to read the payment information outputted by the simple list. In particular, if a user is unaware of a business name at which payment is made and a long period of time elapses after the payment, it is not easy for the user to recall the payment. Hence, it may be desirable to have a method to more efficiently control the payment information.

### SUMMARY

Accordingly, an aspect of the present invention is to address the above-noted and other problems.

Another aspect of the present invention is to provide a mobile terminal enabling a user to easily read payment information and a method of controlling therefor.

A further aspect of the present invention is to provide a mobile terminal enabling a user to share payment information with a different user and a method of controlling therefor. Technical tasks obtainable are non-limited to the above-mentioned technical task and other technical tasks can be clearly understood from the following description by those having ordinary skill in the technical field to which the present invention pertains.

Additional features will be set forth in part in the description which follows and in part will become apparent to those having ordinary skill in the art upon examination of the following or may be learned from practice of the invention. Objectives and other advantages of the invention may be realized and attained by the structure particularly pointed out in the written description and claims hereof as well as the appended drawings.

According to one embodiment, a mobile terminal includes a touch screen, a memory configured to store a plurality of payment information and a controller, the controller configured to output a list of a plurality of the stored payment information via the touch screen, the controller configured to output a first payment item of the list in a manner of switching the first payment item into a first display object in response to a prescribed user input. In this case, the first display object can include tag information identical to tag information of the first payment item.

According to a different embodiment, a method of controlling a mobile terminal includes storing a plurality of payment information, outputting a list of a plurality of the stored payment information via the touch screen and outputting a first payment item of the list in a manner of switching the first payment item into a first display object in response to a prescribed user input. In this case, the first display object includes tag information identical to tag information of the first payment item.

Another embodiment relates to a mobile terminal that includes a touchscreen, a memory configured to store a plurality of payment items, and a controller. The controller causes the touchscreen to display a list of the plurality of payment items stored in the memory and switches the displaying of a first payment item of the list to display a first display object in response to a received user input, where the first display object includes tag information that corresponds to tag information of the first payment item.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

It is to be understood that both the foregoing general description and the following detailed description of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention.
FIG. 1A is a block diagram of a mobile terminal in accordance with the present disclosure.
FIGS. 1B and 1C depict views of one example of the mobile terminal, viewed from different directions.
FIG. 2 is a flowchart for a control method of efficiently managing a plurality of payment information according to one embodiment of the present invention.
FIGs. 3A-3C are diagrams of an example of a list of payment information according to one embodiment of the present invention.
FIGs. 4A-4C are diagrams of an example of various display objects capable of being switched according to one embodiment of the present invention.
FIGs. 5A-5B are diagrams for a method of inquiring about payment information while a picture related to a payment event is outputted according to one embodiment of the present invention.
FIGs. 6A-6B are diagrams for a control method of connecting a picture related to a payment event by a gallery application according to one embodiment of the present invention.
FIGs. 7A-7C are diagrams for a list of payment information outputted daily, weekly and monthly in a manner of being switched according to one embodiment of the present invention.
FIGs. 8A-8B and 9A-9B are diagrams for a control method of integrating a plurality of payment items into a single integrated payment item according to one embodiment of the present invention.
FIGs. 10A-10C are diagrams for a control method of outputting a plurality of payment items on a list in a manner of switching all of a plurality of the payment items according to one embodiment of the present invention.
FIGs. 11A-11B are diagrams for a control method of automatically outputting a coupon object on a list according to one embodiment of the present invention.
FIGs. 12A-12C are diagrams for a discount payment item capable of being outputted on a payment information list according to one embodiment of the present invention.
FIGs. 13A-13B are diagrams for a control method of easily transmitting an advance payment request according to one embodiment of the present invention.
FIGs. 14A-14C are diagrams for a control method of easily designating a search range of a payment breakdown according to one embodiment of the present invention.
FIGS. 15A-15B, 16A-16C, and 17A-17C are diagrams for a control method of configuring a monthly/annual budget and comparing the monthly/annual budget and a currently used amount of money with each other according to one embodiment of the present invention.
FIGs. 18A-18B are diagrams for a control method of outputting a warning alarm according to one embodiment of the present invention for the case that payment exceeding a configured budget occurs.
FIGs. 19A-19B are diagrams for a control method of easily aggregating stats with each other according to a plurality of dates, which are distinguished from each other via a date distinction bar according to one embodiment of the present invention.
FIGs. 20A-20B are diagrams for a control method of sorting payment items according to a card payment means or a card company on a list according to one embodiment of the present invention.
FIGs. 21A-21C are diagrams for a control method of sharing a payment breakdown with a different mobile terminal according to one embodiment of the present invention.
FIGs. 22A-22C are diagrams for a control method of changing a payment means for an item of which payment is already completed according to one embodiment of the present invention.
FIGs. 23A-23C are diagrams for a control method of calculating an item of which payment is already completed in a manner of dividing the payment by a plurality of users according to one embodiment of the present invention.
FIGs. 24A-24C are diagrams for a control method of managing payment sharing according to one embodiment of the present invention.
FIGs. 25A-25B are diagrams for payment request information on a payment information list according to one embodiment of the present invention.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

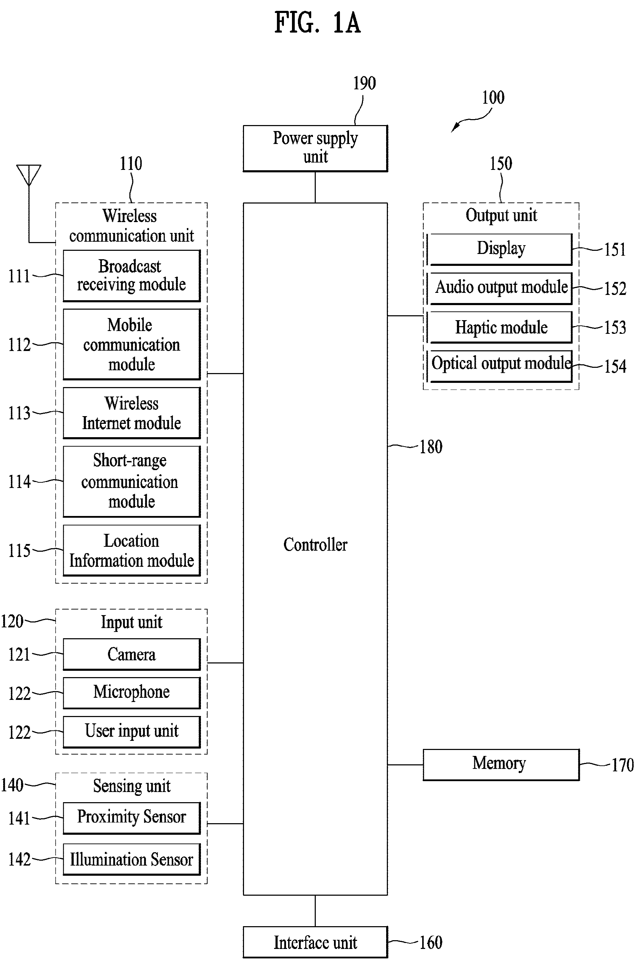

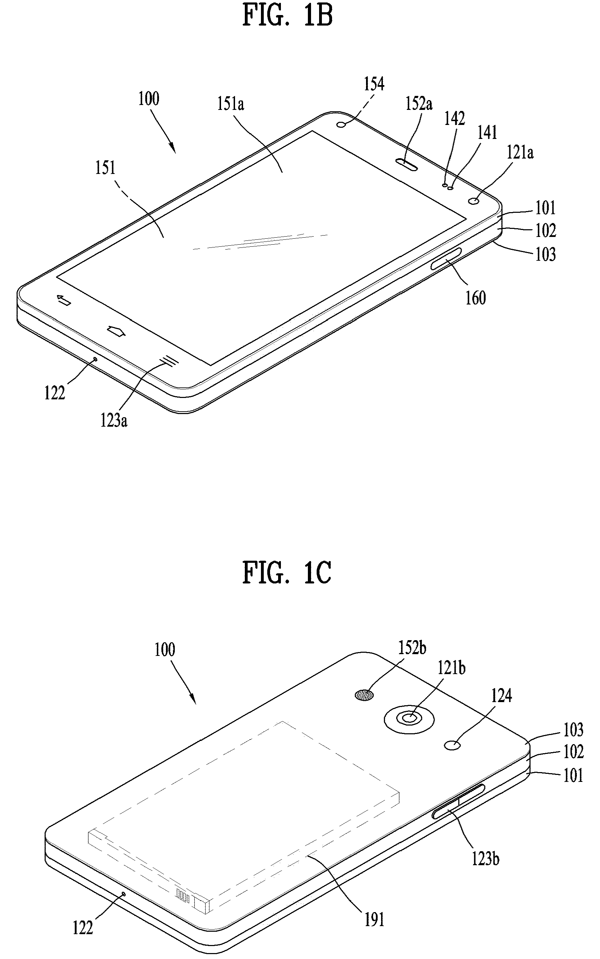

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omnidirectional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power (RSRP), reference signal received quality (RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

When payment is made using a credit card, a mobile terminal of a user can receive payment information on a corresponding payment event via a text message or data communication through a mobile communication network. And, if payment is made through a payment system mounted on the mobile terminal itself, payment information can be directly received from a payment terminal (a POS terminal and the like) via short-range wireless communication or the like. As mentioned in the foregoing description, although a method of receiving the payment information is not limitative, a mobile terminal can store and manage various payment information.

One embodiment of the present invention intends to propose a control method capable of efficiently managing and controlling the payment information. The control method is explained in more detail with reference to following drawings.

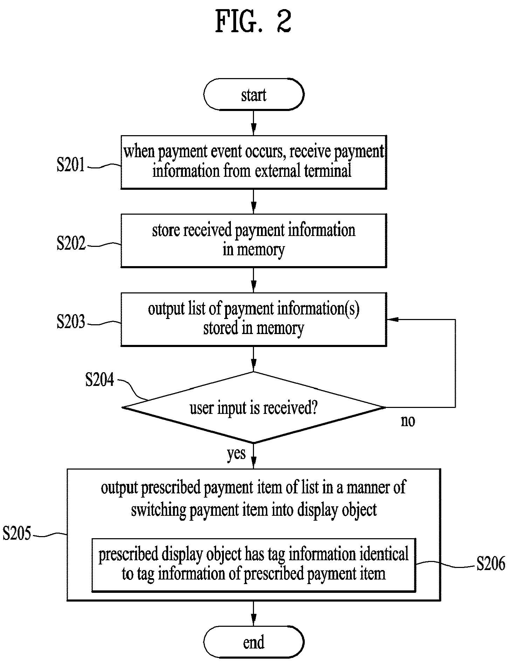

FIG. 2 is a flowchart for a control method of efficiently managing a plurality of payment information according to one embodiment of the present invention.

In the block S201, the controller 180 can receive payment information from an external terminal in response to occurrence of a payment event.

In the block S202, the controller 180 can store the payment information received in block S201 in the memory 170.

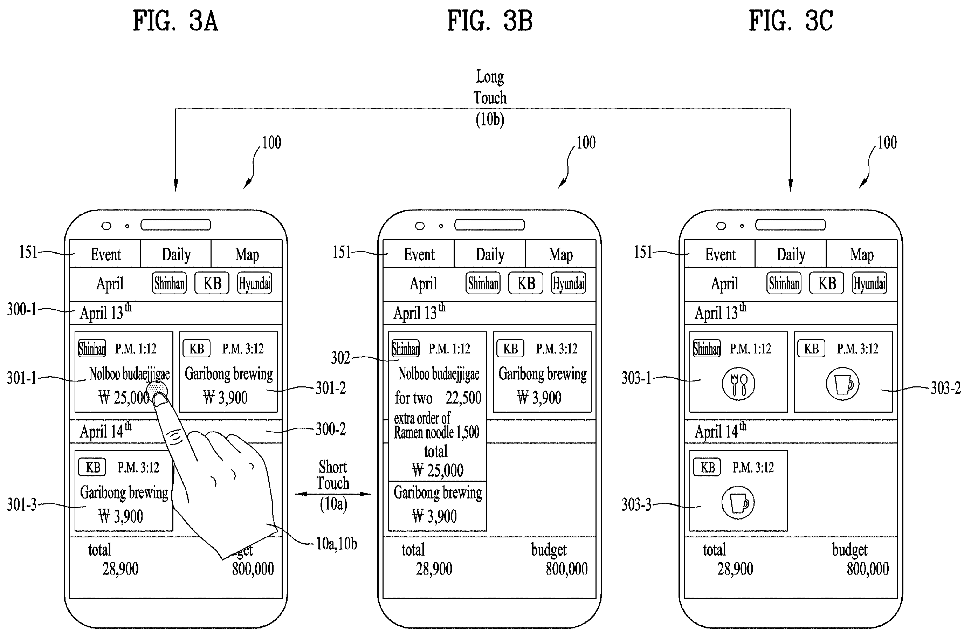

In the block S203, the controller 180 can output (e.g., cause the display to display) a list of payment information(s) stored in the memory via a touch screen 151. In this case, each item of the list may correspond to a single payment event. An example of the outputted list is explained with reference to FIG. 3.

FIGs. 3A-3C are diagrams of an example of a list of payment information according to one embodiment of the present invention.

Referring to FIG. 3A, the controller 180 outputs a list of payment information via a touch screen 151. According to the example shown in FIG. 3A, the outputted list includes a first payment item to a third payment item 301-1 to 301-3 and the items are distinguished from each other according to a payment date.

One embodiment outputs a date distinction bar 300-1/300-2 to distinguish the payment items from each other according to a payment date.

A first and a second payment item 301-1/301-2 paid on April 13^{th} are outputted on a region distinguished by a first data distinction bar 300-1. Similarly, a third payment item 301-3 paid on April 14^{th} is outputted on a region distinguished by a second date distinction bar 300-2.

Each of the payment items 301-1/301-2/ etc. can output at least one selected from the group including a location (a business name) at which payment is made, payment amount, a payment date, payment time and a payment means. In the example of the first payment item 301-1, the first payment item uses such a payment means as 'Shinhan card' and includes such a payment date as '1:12 P.M.', a business name as 'Nolboo budaejjigae' and a payment amount as ' 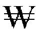 25,000'. The aforementioned output is just an example. Additional output could include various payment information or omit one of the outputted items.

One embodiment outputs a display object for various information associated with each payment item of the list without being restricted to simply outputting the list only. In general, it is not easy to recall all payment events for payment items on the list. Thus, one embodiment provides output auxiliary information to make a user to recall a payment event.

Referring back to FIG. 2, in block S204, the controller 180 determines whether an input of a user is received. If the input of the user is received, it may proceed to block S205. If the user input is not received, control may then return to block S203 to output a payment list.

In block S205, the controller 180 can switch a prescribed payment item of the list into a display object. In this case, the prescribed payment item may correspond to an object including tag information that is identical to tag information of the prescribed payment item (block S206). One embodiment of the present invention outputs the switched display object in various ways according to the input of the user.

In FIG. 3A, if a short touch input 10a is received as a user input, the controller 180 switches a first payment item 301-1 of a position at which the short touch input 10a is received into a payment detail information object 302 and may be then able to output the payment detail information object 302 (refer to FIG. 3B). The payment detail information object 302 may correspond to an object including a payment detail breakdown. For instance, the payment detail breakdown in FIG. 3B may correspond to a menu of ordered food and price per menu item.

In FIG. 3A, if a long touch input 10b is received as a user input, the controller 180 switches a first payment item 301-1 of a position at which the long touch input 10b is received into a first business type information object 303-1 and then output the first business type information object 303-1. A business type information object corresponds to an object indicating a business type of a business at which a payment is made and may be able to include at least one item such as 'food', 'fashion', 'accommodations', 'transportation', 'finance/insurance' and the like. In particular, as shown in FIG. 3C, the business type information object can be displayed by a shape of an emoticon indicating a corresponding business type.

Meanwhile, in FIG. 3A, if a long touch input (not depicted) is received on a second payment item 301-2, the controller 180 can switch the second payment item 301-2 into a second business type information object 303-2 and output the second business type information object 303-2 as shown in FIG. 3C. In addition, if a long touch input (not depicted) is received on a third payment item 301-3, the controller 180 can switch the third payment item 301-3 into a third business type information object 303-3 and output the third business type information object 303-3 as shown in FIG. 3C.

In one embodiment of the present invention, tag information is used to indicate metadata related to prescribed information. The metadata corresponds to information on prescribed information. Hence, tag information on a prescribed payment item may include at least one of payment information on the prescribed payment item. In the example of a first payment item of FIG. 3A, such a business name as 'Nolboo budaejjigae' can be included as tag information on the first payment item. Moreover, both payment date and payment time may become tag information on the first payment item. Tag information on a display object can also be identically used. For instance, if a display object corresponds to a thumbnail object for a prescribed picture, a date on which the picture is captured, a time at which the picture is captured, a location at which the picture is captured, and the like, can be included in tag information.

According to one embodiment, if information of which tag information is identical to each other are switched and outputted together, it may be able to help a user to recall a corresponding payment event.

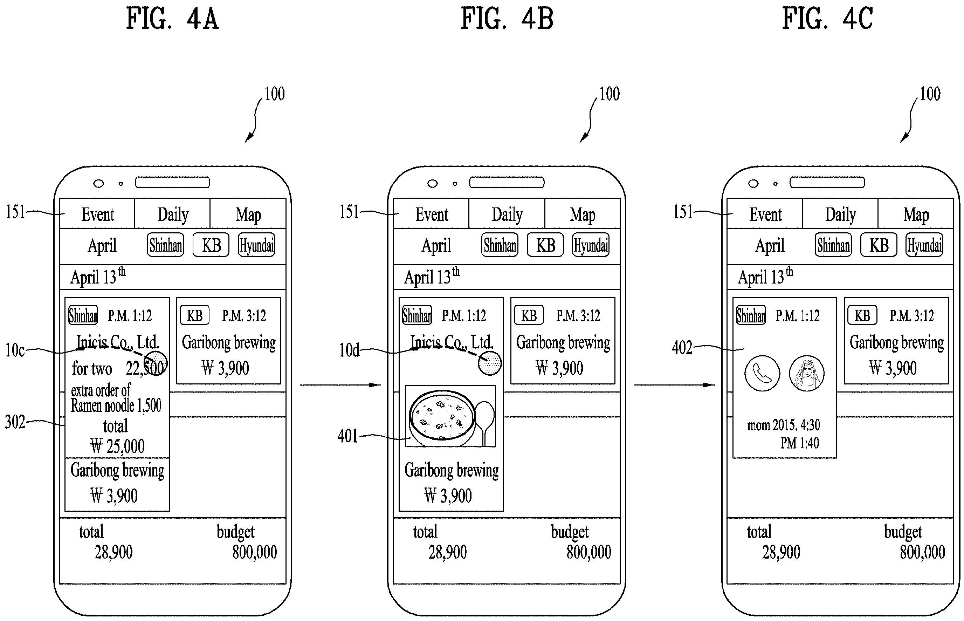

FIGs. 4A-4C are diagrams of an example of various display objects capable of being switched according to one embodiment of the present invention. In general, an easy way for a person to recall memory of the person is to check a picture of that person. Thus, one embodiment outputs a picture sharing tag information along and also provides a picture to the person.

Referring to FIG. 4A, the controller 180 outputs a payment detail information object 302 together with a list. If a prescribed touch gesture 10c (e.g., a gesture touching a corresponding object and dragging the touch in a prescribed direction) is received on the payment detail information object 302, the controller 180 can switch to a picture 401 (or a thumbnail of the picture) sharing tag information identical to the payment detail information object 302 and the picture may be displayed as well. Moreover, if a prescribed touch gesture 10d is received on the picture 401, the controller 180 can output a call history object 402 sharing identical tag information.

The call history object 402 corresponds to an object outputting a call history related to the payment event among telephone call history stored in a mobile terminal 100. The call history related to the payment event may correspond to call history corresponding to a date and time at which the payment is made or a call history matched with a business name at which the payment is made. For instance, if payment is made on 1:12 P.M. April 13^{th}, the call history object 402 can output a call history, which is made within some threshold (e.g., 10 minutes) before and after 1:12 P.M. April 13^{th}.

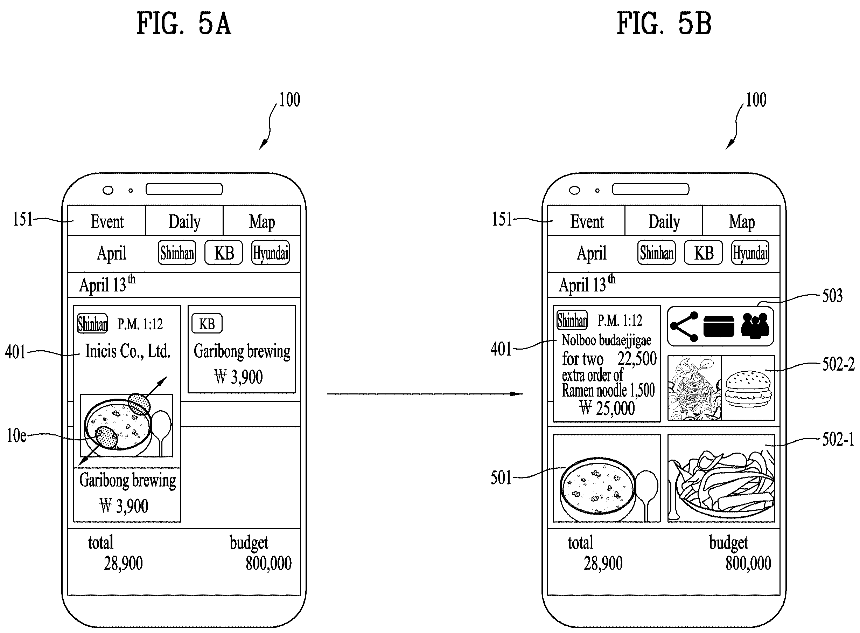

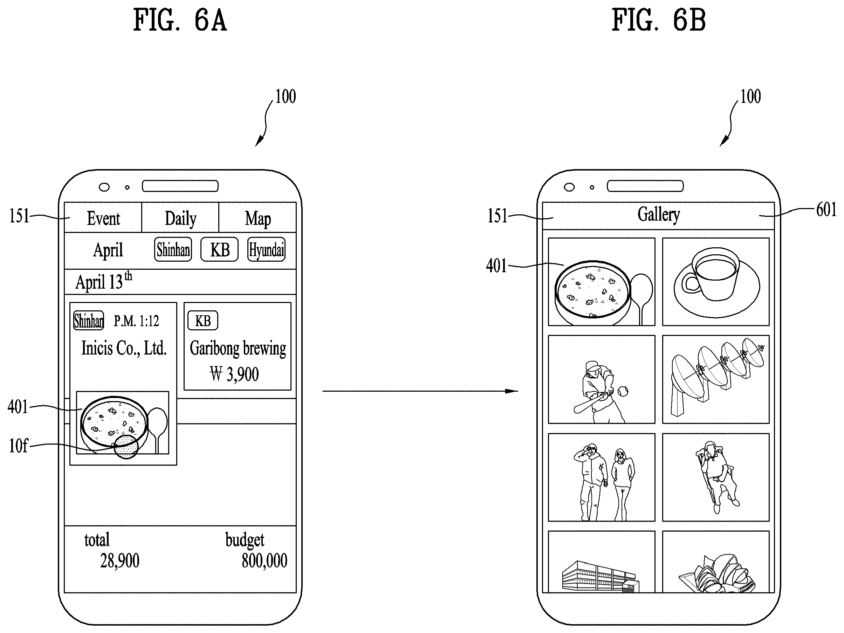

Various examples of checking payment detail information are explained with reference to FIGS. 5A-5B and 6A-6B.

FIGs. 5A-5B are diagrams for a method of inquiring about payment information while a picture related to a payment event is outputted according to one embodiment of the present invention.

As shown in FIG. 5A, the controller 180 outputs a picture 401 on a list of payment information. If a prescribed touch gesture 10e is inputted on the picture 401, the controller 180 can further output payment detail information 501 including tag information identical to tag information of the picture 401 and/or different pictures 502-1/502-2. For instance, the prescribed touch gesture 10e may correspond to a pinch-out gesture. In this case, the pinch-out gesture may correspond to a gesture that is a distance between two signals inputted at the same time is increasing.

Moreover, a different embodiment is to further output an add button region 503 for sharing payment information on a corresponding payment event or a picture. If a command for operating the add button region 503 is received, the controller 180 is able to not only share the payment information but also to perform a function of 'Let's go Dutch' paid by a plurality of persons in a manner of splitting the bill using such things as an SNS (social network service) application as 'KakaoTalk^{™}' and the like. This feature will be described in more detail with regard to FIGS. 6A-6C.

FIGs. 6A-6B are diagrams for a control method of connecting a picture related to a payment event by a gallery application according to one embodiment of the present invention.

As shown in FIG. 6A, the controller 180 outputs a picture 401 on a list of payment information. If a prescribed touch gesture 10f is inputted on the picture 401, the controller 180 can output a thumbnail list 601 of images stored in a memory 170 in a gallery application instead of the list of the payment information. In this case, the outputted thumbnail list 601 can be outputted in a manner of being automatically scrolled to a position at which the picture 401 is located in the thumbnail list 601. Meanwhile, the list of the payment information can be outputted daily, weekly and monthly as required or desired by switching or other manner.

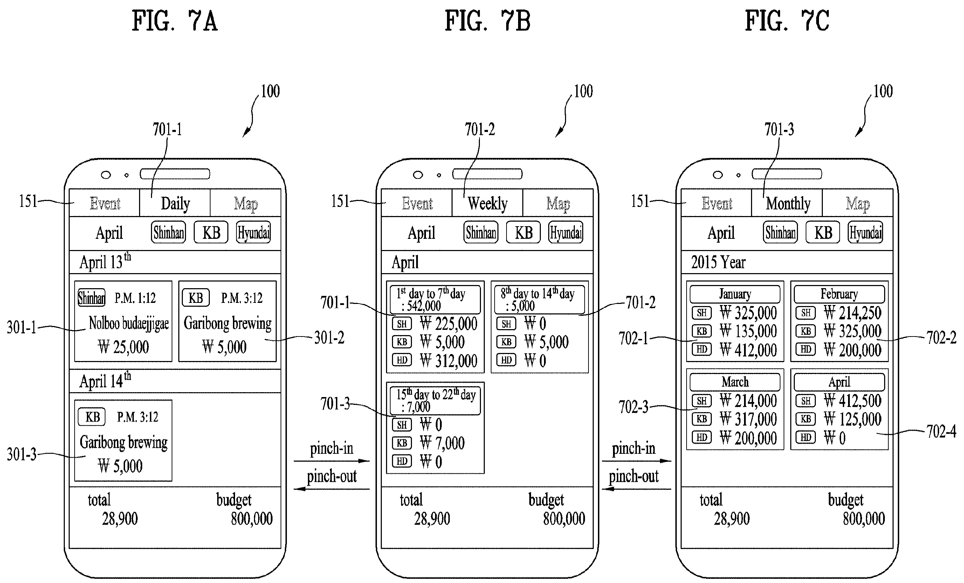

FIGs. 7A-7C are diagrams for a list of payment information outputted daily, weekly and monthly by switching according to one embodiment of the present invention. Such switching may be implemented using a pinch-in/pinch-out input.

Referring to FIG. 7A, if a pinch-in gesture is received on a daily list, the controller 180 can switch from the daily list to a weekly list shown in FIG. 7B. Subsequently, if a pinch-in gesture is received on the weekly list shown in FIG. 7B, the controller can switch from the weekly list to a monthly list as shown in FIG. 7C.

On the other hand, if a pinch-out gesture is received on the monthly list shown in FIG. 7C, the controller 180 can switch from the monthly list to the weekly list as shown in FIG. 7B. Subsequently, if a pinch-out gesture is received on the weekly list as shown in FIG. 7B, the controller can switch from the weekly list to the daily list shown in FIG. 7A.

As mentioned previously with regard to FIG. 7A, the daily list includes payment items 301-1/301-2/etc. corresponding to each payment item and can be outputted on a touch screen 151. In the weekly list shown in FIG. 7B, a main payment item 701-1/701-2/etc. outputting an amount of money to be paid, which is summed up on a weekly basis, as a payment item can be outputted on the touch screen 151. Similarly, in the monthly list shown in FIG. 7C, a monthly payment item 702-1/702-1/etc. outputting an amount of money to be paid, which is summed up on monthly basis, as a payment item can be outputted on the display unit 151.

The described pinch-in/pinch-out gesture is a non-limiting example only, and other gestures may alternatively or additionally be used. If two or more payment information are related to each other, it may be preferable to manage all of the payment information together. Thus, if such payment information are related to each other, one embodiment of the present invention proposes a control method of aggregating payment items with each other based on an input of a user.

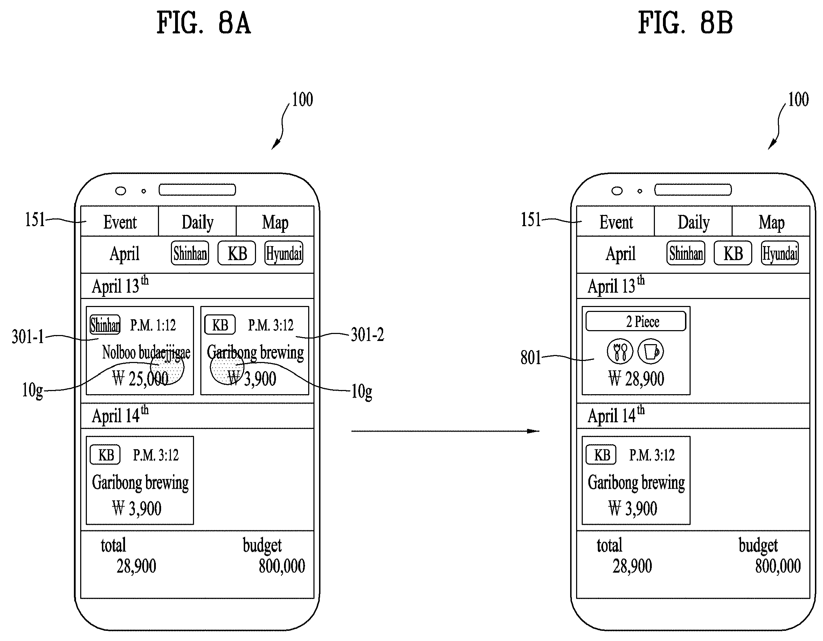

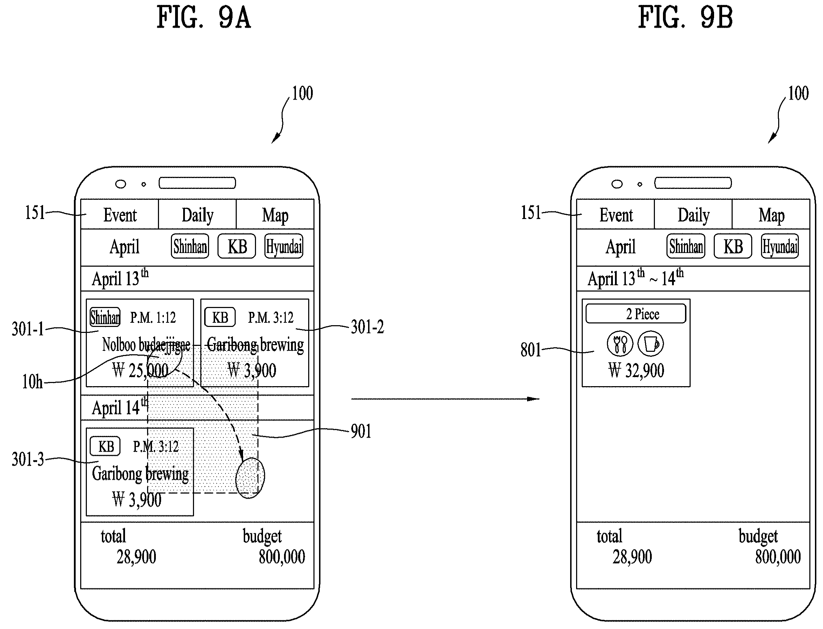

FIGs. 8A-8B and 9A-9B are diagrams for a control method of integrating a plurality of payment items into a single integrated payment item according to one embodiment of the present invention. In particular, FIGs. 8A-8B show a control method of passively selecting payment items to be aggregated and FIGs. 9A-9B show a control method of aggregating payment items with each other in a manner of designating a region to include the payment items to be aggregated in the region.

Referring to FIG. 8A, the controller 180 outputs a list of payment information in a manner of including a first payment item 301-1 and a second payment item 301-2 in the list. If an input 10g for respectively selecting the first and the second payment item 301-1/301-2 is received, as shown in FIG. 8B, the controller 180 can output an aggregated payment item 801 in a manner of aggregating the first payment item 301-1 and the second payment item 301-2 with each other. The aggregated payment item corresponds to an object for displaying payment information on two or more aggregated payment items. An amount of money to be paid can be displayed in a manner of being summed up or business type information can be displayed in a manner of being aggregated with each other. In this case, if the business type information are various, various business type information can be outputted in a manner of being listed.

In this case, the input 10g for selecting the payment items may correspond to an input for sequentially (and in some cases separately) touching each of the payment items or an input for touching the payment items at the same time. Alternative, the input may correspond to an input touching the payment items at the same time and pinching-in the touch while the touch is maintained.

Referring to FIG. 9A, the controller 180 outputs a list of payment information including a first payment item 301-1 to a third payment item in the list. If an input 10h for designating a region including the first 301-1 to the third payment item 301-3 is received, as shown in FIG. 9B, the controller 180 can output an aggregated payment item 801 in a manner of aggregating the first 301-1 to the third payment item 301-3 with each other. This aggregated payment item 801 is the same as what is mentioned earlier in FIGs. 8A-8B.

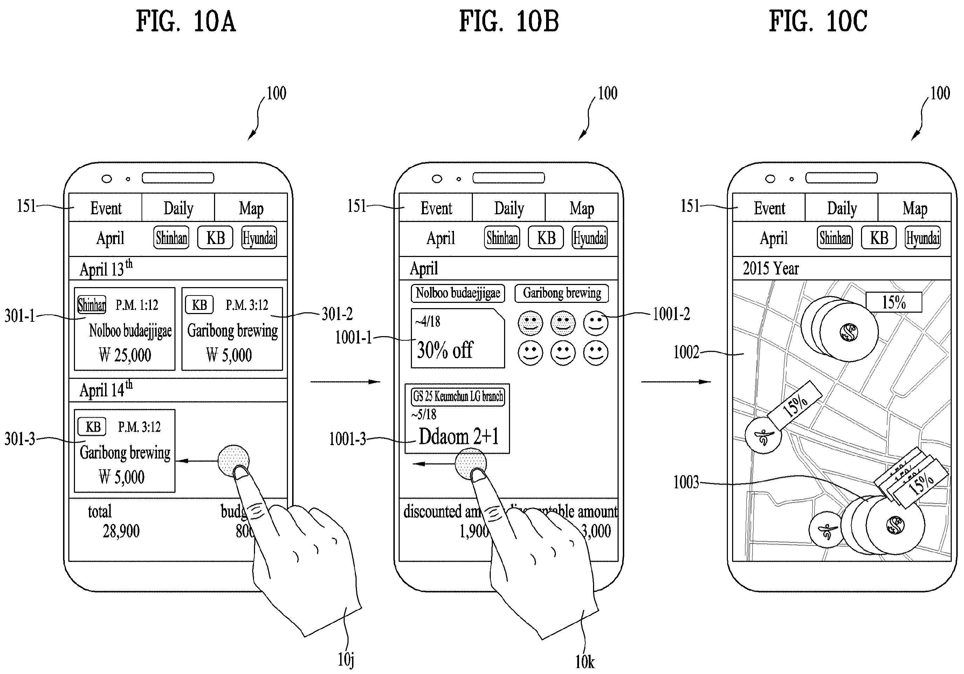

Although output switching of a single payment item on a list has been described in the above, such an embodiment is not so limited. For instance, FIGS. 10A-10C show a control method of switching output of a plurality of payment items on a list.

FIGs. 10A-10C are diagrams for a control method of outputting a plurality of payment items on a list in a manner of switching all of a plurality of the payment items according to one embodiment of the present invention.

Referring to FIG. 10A, the controller 180 outputs a list of payment information including a plurality of payment items 301-1 to 301-3 via a touch screen 151. If a prescribed touch gesture 10j is received on the list, the controller 180 can switch each of at least one or more payment items 301-1 to 301-3 included in the list into a prescribed display object. In this case, as discussed above, each of the switched display objects and a corresponding payment item share identical tag information with each other.

Referring to FIG. 10B, the controller 180 outputs a first payment item 301-1 in a manner of switching the first payment item into a first coupon object 1001-1. A coupon object refers to an object outputting a discount coupon or an accumulation coupon capable of being used in a shop name corresponding to payment information. If a payment event occurs, a user can easily read and access a coupon corresponding to the payment event. Similarly, second and third coupon objects 1001-2, 1001-3 are outputted in response to a second and a third payment item 301-2, 301-3, respectively.

When the coupon objects are outputted, if a prescribed touch gesture 10k is input, as shown in FIG. 10C, the controller 180 can output coupon information 1003 on each of the coupon objects on a map 1002.

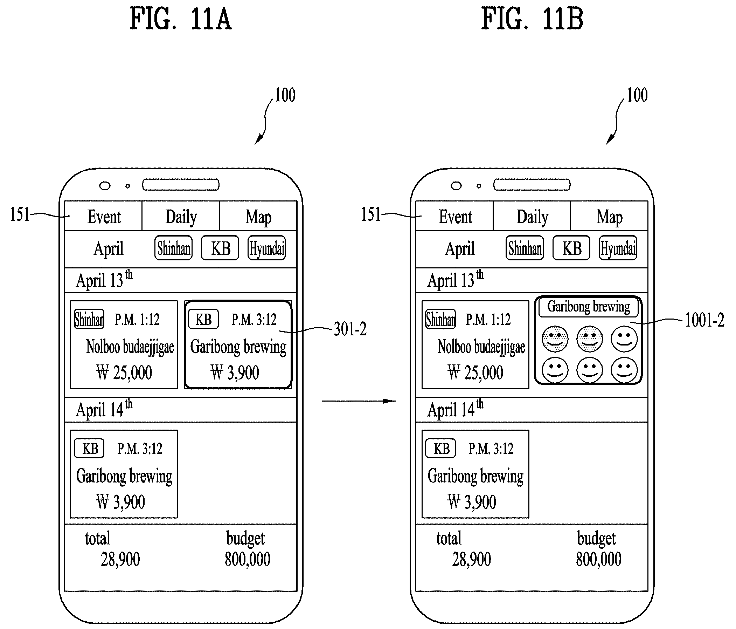

FIGs. 10A-10C depict switching each of a plurality of coupon objects on a list into a coupon object, but switching a single payment item into a coupon object may alternatively be implemented. Moreover, although a coupon object is output based on a touch gesture of a user, an embodiment shown in FIGs. 11A-11C present automatically outputting a coupon object.

FIGs. 11A-11B are diagrams for a control method of automatically outputting a coupon object on a list according to one embodiment of the present invention.

If payment location information included in the payment information is matched with current location information of a mobile terminal 100, one embodiment of the present invention outputs a corresponding payment item by switching the payment item into a coupon object. In particular, in order to allow a user to easily utilize a coupon capable of being used in a current location of the mobile terminal 100, it may output an object for the coupon and provide the object to the user.

Referring to FIG. 11A, the controller 180 outputs a list including a second payment item 301-2. If a location of the mobile terminal 100 changes and a current location of the mobile terminal 100 is matched with a payment location of the second payment item 301-2, the controller 180 can switch from the second payment item 301-2 to a second coupon object 1001-2 automatically (e.g., without a separate input of a user).

A discount payment item, which is outputted in response to a discount payment event, will now be explained.

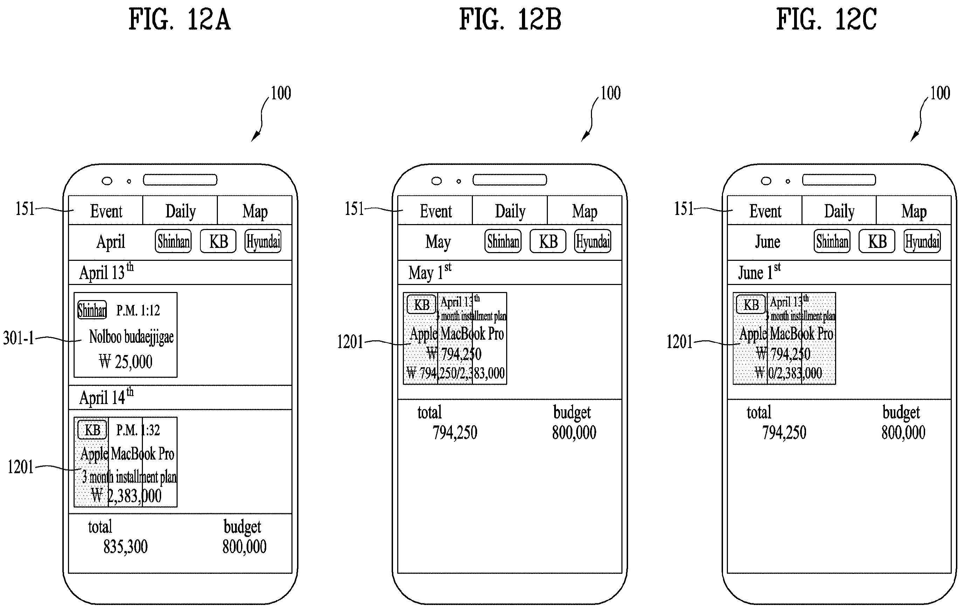

FIGs. 12A-12C are diagrams for a discount payment item capable of being outputted on a payment information list according to one embodiment of the present invention.

When a payment is made using a credit card, the payment can be made by an installment purchase designed to make the payment over prescribed months. In such a case of an installment purchase, it may be necessary to inform a user of progress of the installment purchase. Thus, one embodiment advises the user of the progress of the installment purchase by outputting an item for the installment purchase on a list.

Referring to FIG. 12A, the controller 180 outputs an installment purchase item 1201 on a touch screen 151 together with a first payment item 301-1. One embodiment further outputs an indicator (e.g., a progressive bar or the like) indicating the progress of the installment purchase on the installment purchase item 1201.

Referring to examples shown in FIG. 12A-12C, the outputted installment purchase item 1201 is divided into equal parts based on the number of months of the installment plan and color of the equally divided regions is switched as payment for a corresponding month is made. More specifically, consider that the installment purchase item 1201 is bought using a three month installment plan for a payment amount of W2,383,000 for example. If a first payment (i.e., payment for first trade on April) is made, the controller 180 changes color of a first region out of 3 even parts of the installment purchase item 1201.

As shown in FIG. 12B, if a second payment is made in May, the controller 180 can output the installment purchase item 1201 of which color of a second region out of the three even parts of the installment purchase item 1201 is changed. Lastly, as shown in FIG. 12C, if a third payment is made in June, the controller 180 can output the installment purchase item 1201 of which color is changed up to a third region out of the three parts of the installment purchase item 1201. In particular, when an installment purchase item is outputted in accordance with a payment made on each month, it may be able to inform a user of an order of the payment.

An amount of money already paid and an amount of money to be paid can be additionally displayed on each installment purchase item (e.g., FIGS. 12B, 12C).

In the case of an installment plan, there is such a system as an advance payment for making a payment for a remainder of the money owed at one time. Such an embodiment will now be described.

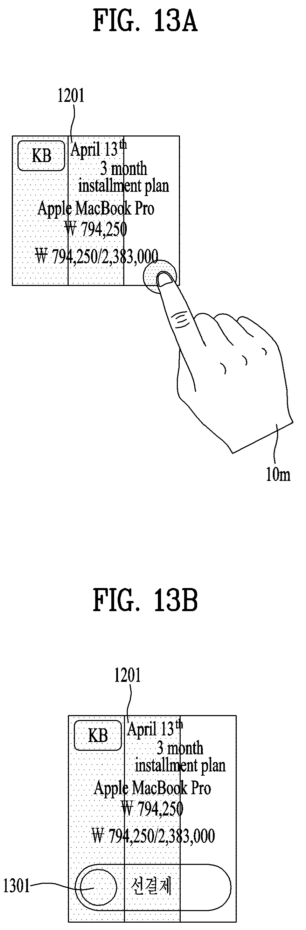

FIGs. 13A-13B are diagrams for a control method of easily transmitting an advance payment request according to one embodiment of the present invention.

Referring to FIG. 13A, the controller 180 outputs installment purchase item 1201. Consider that a second payment is completed of a three-month installment plan and one payment remains for the purchase item. If a touch gesture 10m of a user is inputted, as shown in FIG. 13B, the controller 180 can output a button 1301 for asking whether to make an advance payment (also referred to as an advance payment button, e.g., a slide button). In this case, if the advance payment button 1301 is operated by a user (e.g., if the slide button is touched and slid in a predetermined direction), the controller 180 can transmit an advance payment request signal to a predetermined card company server.

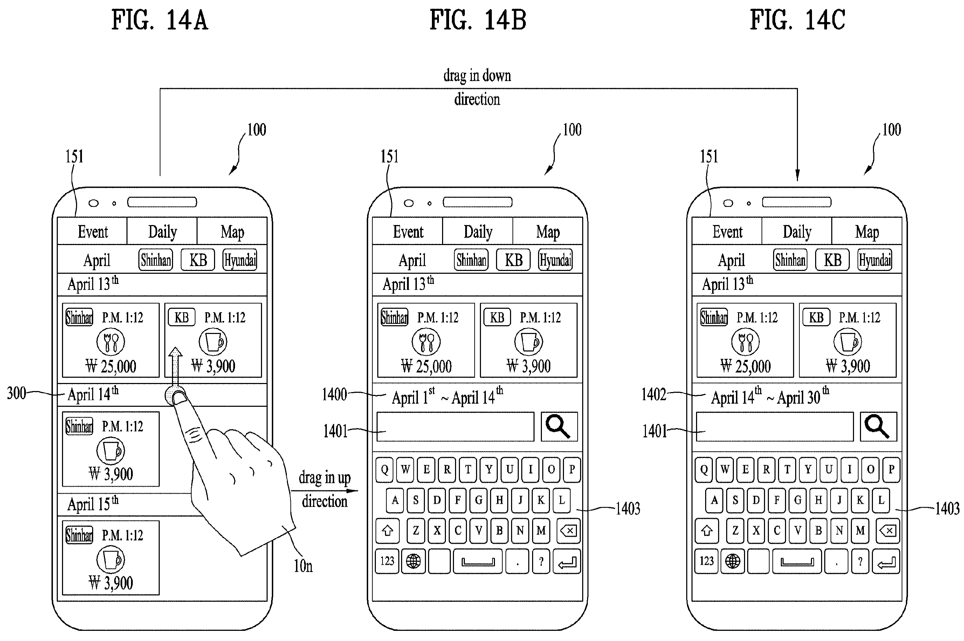

A control method for more easily searching for a payment breakdown will now be described with regard to FIGs. 14A-14C, which are diagrams for a control method of easily designating a search range of a payment breakdown according to one embodiment of the present invention.

Referring to FIG. 14A, the controller 180 outputs a list of payment information and a date distinction bar 300 for distinguishing the list according to a date at the same time. If the date distinction bar 300 is touched and dragged in up direction, one embodiment designates a search section to be a section before a corresponding date. On the other hand, if the date distinction bar 300 is touched and dragged in the down direction, one embodiment designates a search section to be a section after a corresponding date.

As shown in FIG. 14A, if a touch is inputted on the date distinction bar 300 corresponding to 'April 14^{th,} and the touch is dragged in the up direction, as shown in FIG. 14B, the controller 180 designates 1400 at an end of a search section as April 14^{th} and may be able to output a search word input window 1401. In this case, a start of the search section can be designated by a first day of a corresponding month (or a first day of a corresponding year), but other designations are possible.

As shown in FIG. 14A, if the touch is inputted on the date distinction bar 300 corresponding to 'April 14^{th,} and the touch is dragged in the down direction, as shown in FIG. 14C, the controller 180 designates 1402 at a start of the search section as April 14^{th} and may be able to output a search word input window 1401. In this case, an end of the search section can be designated by a last day of a corresponding month (or a last day of a corresponding year), but other designations are possible. The controller 180 can also perform a search by inputting a search word to the search word input window 1401 using a virtual keypad 1403 outputted together.

A control method for configuring a budget and comparing the configured budget and a currently used amount of money with each other will now be presented.

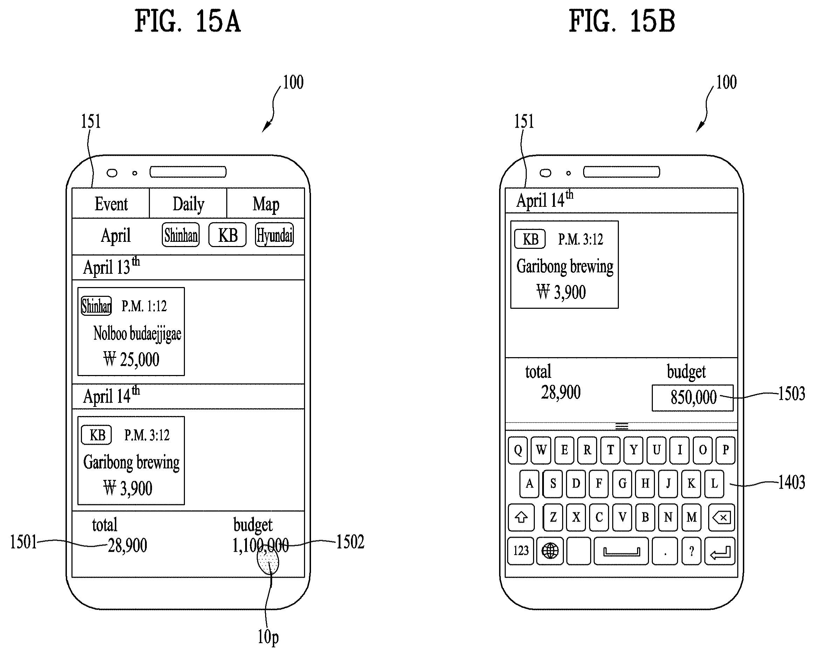

FIGS. 15A-15B, 16A-16C, and 17A-17C are diagrams for a control method of configuring a monthly/annual budget and comparing the monthly/annual budget and a currently used amount of money with each other according to one embodiment of the present invention.

Referring to FIG. 15A, the controller 180 outputs a currently used amount of money 1501 and a configured budget 1502 together with a list of payment information.

The currently used amount of money 1501 may vary according to a configuration of a user. The currently used amount of money may be able to indicate the total of payment amounts of a corresponding month in the case of a daily list or a weekly list. In the case of a monthly list, the currently used amount of money may be able to indicate the total of payment amounts of a corresponding year. In particular, since FIG. 15A shows a daily list, the currently used amount of money 1501 shows the total amount of money paid in April.

The configured budget 1502 corresponds to an amount of money predetermined as a target amount of money to be used by a user. The configured budget 1502 can be configured with a configuration identical to the configuration of the currently used amount of money 1501. In particular, the configured budget indicates a configured budget of a corresponding month in case of a daily list or a weekly list. The configured budget indicates a configured budget of a corresponding year in the case of a month list.

If an input 10p for touching the configured budget 1502 is received, as shown in FIG. 15B, the controller 180 can directly input/modify the configured budget 1502 by outputting a virtual keypad 1403 together with a configured budget input window 1503.

A control method for more easily configuring the configured budget 1502 is explained with reference to 16A-16C, and 17A-17C.

In FIGs. 15A-15B, since a budget is configured by direct typing, there still exists some level of inconvenience. As such, one embodiment includes a control method capable of easily changing budget configuration using a touch gesture only.

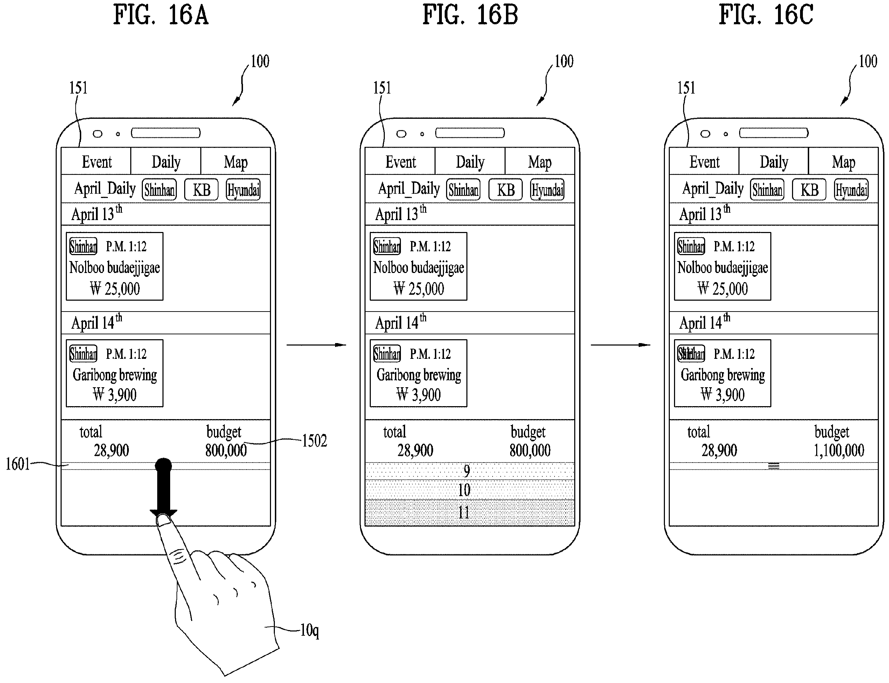

Referring to FIG. 16A, ' 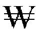 800,000' is inputted as a current configured budget 1502. If a touch gesture 10q is dragged in the down directions, the controller 180 controls the configured budget 1502 to be increased (FIG. 16B to FIG. 16C). On the other hand, if the budget control bar is touched and dragged in the up direction, the controller 180 can control the configured budget 1502 to be decreased. Upward/downward control can therefore be performed in the opposite way according to a drag direction.

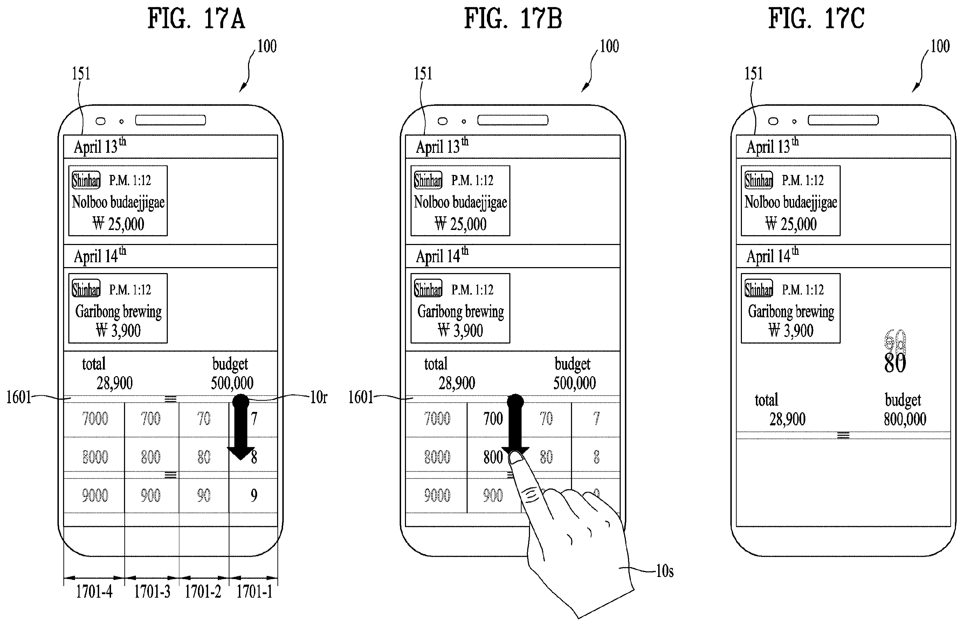

The configured budget 1502 can be adjusted in accordance with a length of dragging. Thus it may be desirable to change the unit of adjustment. This feature will be described with reference to FIGs. 17A-17C. One embodiment of these figures controls an adjusting unit to be differentiated from each other in case of dragging a budget control bar according to a touch point of the budget control bar 1601.

As shown in FIG. 17A, the controller 180 divides the budget control bar 1601 into a prescribed number of regions (e.g., four regions 1701-1 to 1701-4) and an adjusting unit can be differently configured according to each region like a thousand won unit, a ten thousand won unit, a hundred thousand won unit, a million won unit, and the like. Other currencies (e.g., US dollars) may also be used. In FIG. 17A, if a gesture 10r for touching a first region 1701-1 of the budget control bar 1601 is received, the controller 180 adjusts the configured budget to a thousand won unit based on a number corresponding to the received gesture 10r and outputs the number corresponding to the gesture in a manner of highlighting the number.

As shown in FIG. 17B, if a gesture 10s for touching a third region 1701-3 of the budget control bar 1601 and dragging the touch is received, the controller 180 can adjust the configured budget to a hundred thousand won unit according to the gesture. The controller 180 can sequentially increase the configured budget, which is configured as ' 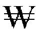 500,000', to ' 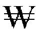 600,000', ' 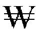 700,000' and ' 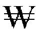 800,000' (refer to FIG. 17C.

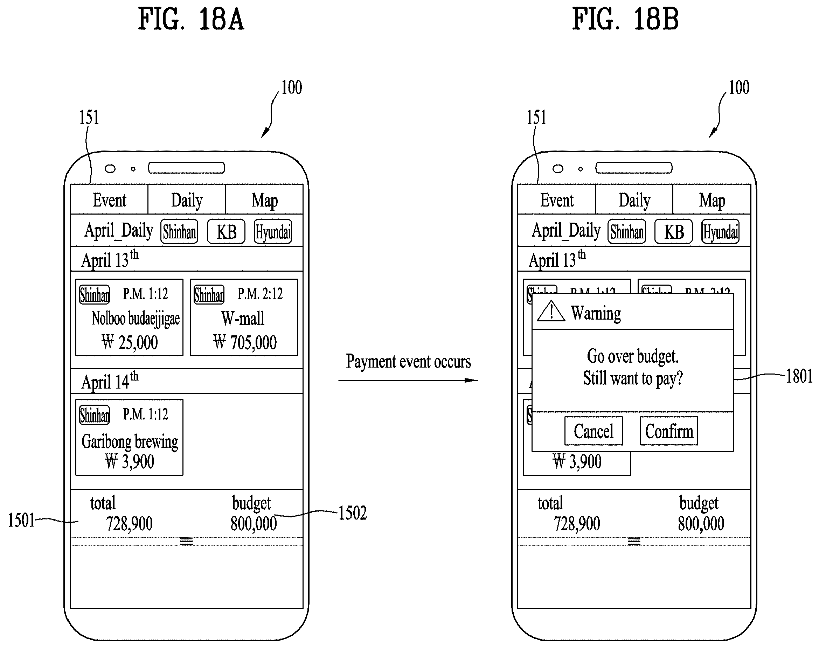

A budget configured using the just described method can be used to warn a user against excessive payment. Further aspects of this feature will be described with regard to Fig. Regarding this embodiment, it shall be described with reference to FIGs. 18A-18B.

FIGs. 18A-18B are diagrams for a control method of outputting a warning alarm according to one embodiment of the present invention for the case that payment exceeding a configured budget occurs.

Referring to FIG. 18A, the controller 180 outputs the currently used amount of money 1501 and a configured budget 1502. When ' 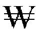 728,900' and ' 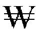 800,000' are inputted as the currently used amount of money 1501 and the configured budget 1502, respectively, consider that a payment event occurs and the payment event makes the currently used amount of money exceed the configured budget 1502.

If the payment event occurs, the controller 180 outputs a warning pop-up window 1801 to indicate that the currently used amount of money exceeds the configured budget 1502 due to the current payment. The corresponding payment is made only when a confirmation input is received via the warning pop-up window 1801. If a cancellation input is received via the warning pop-up window 1801, the controller 180 can control the corresponding payment to be cancelled. Thus the controller may be able to directly cancel the corresponding payment or transmit a cancellation request message.

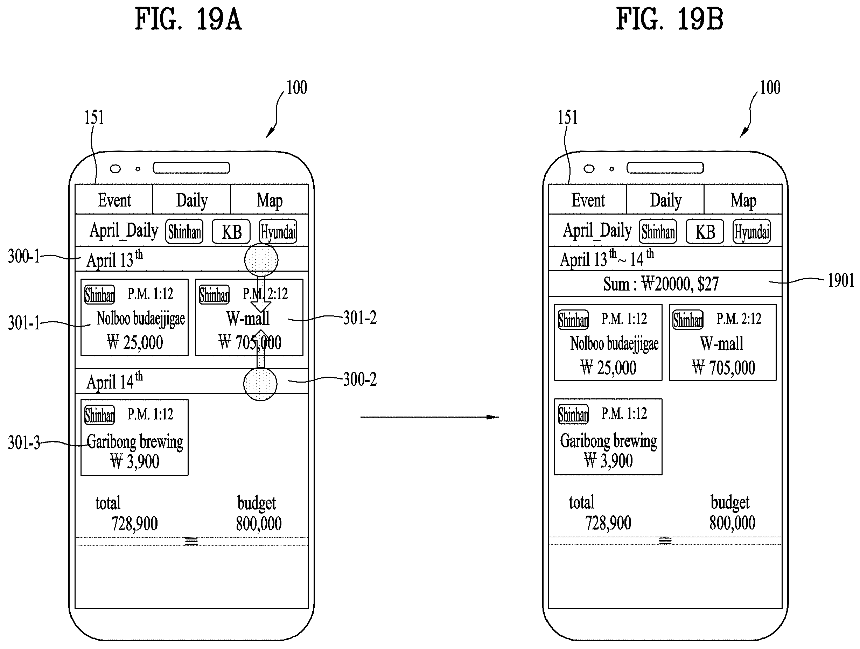

Described embodiments includes a plurality of payment items that are aggregated with each other and a plurality of the payment items are controlled to be managed as a single aggregated payment item FIGs. 19A-19B show a control method for easily aggregating stats with each other according to a plurality of dates, which are distinguished from each other via a date distinction bar.

Referring to FIG. 19A, the controller 180 outputs a first payment item 301-1 and a second payment item 301-2 as a payment breakdown for 'April 13^{th,} according to a first date distinction bar 300-1 and a second date distinction bar 300-2, and outputs a third payment item 301-3 as a payment breakdown of 'Aril 14^{th,}.

If a command for selecting the first date distinction bar 300-1 and the second date distinction bar 300-2 is received, the controller 180 aggregates the payment breakdowns of the two dates corresponding to the first and second date distinction bar 300-1, 300-2, totals up payment amounts, and may be able to output a result of the summation 1901. This feature may be able to help a user to easily total up the payment breakdowns.

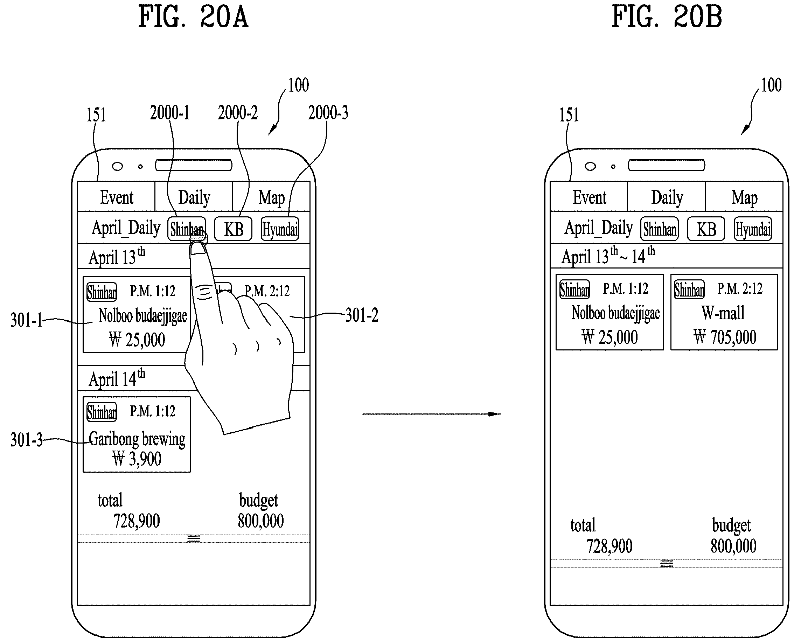

Simply aggregating two date distinction bars with each other is explained in the foregoing embodiment, but two or more date distinction bars can be aggregated with each other to total up payment breakdowns of more dates. A control method for sorting payment items according to a card payment means or a card company will now be explained with reference to FIGs. 20A-20B.

FIGs. 20A-20B are diagrams for a control method of sorting payment items according to a card payment means or a card company on a list according to one embodiment of the present invention.

Referring to FIG. 20A, a first payment item 301-1 and a second payment item 301-2 correspond to payment items paid by a 'Shinhan card' and a third payment item 301-3 corresponds to a payment item paid by 'KB card'.

If a first sorting button 2000-1 is selected, the controller 180 filters payment items except payment items paid by a corresponding payment means (or card company) and may be then able to output the first payment item 301-1 and the second payment item 301-2 only. Similarly, if a second sorting button 2000-2 and a third sorting button 2000-3 are selected, the controller 180 can output payment items corresponding to the sorting buttons only.

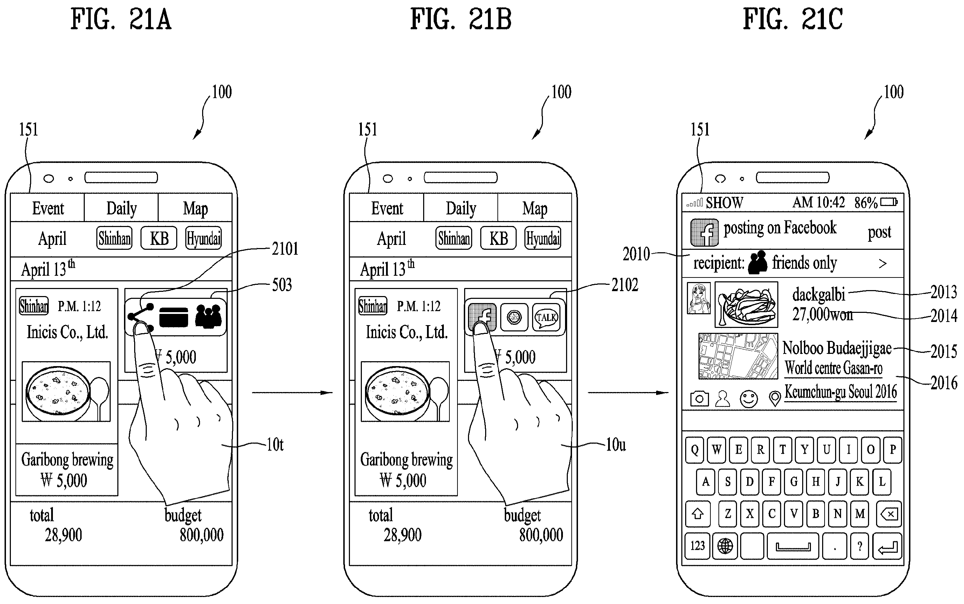

The add button region 503 has been described with reference to FIGs. 5A-5B, and will be described in more detail with reference to FIGS. 21 through 24.

FIGs. 21A-21C are diagrams for a control method of sharing a payment breakdown with a different mobile terminal according to one embodiment of the present invention.

Referring to FIG. 21A, the controller 180 outputs an add button region 503 for a first payment item. If a share button 2101 located at the add button region 503 is selected 10t, as shown in FIG. 21B, the controller 180 can output a list 2102 of applications to select an application to be used for sharing payment information. If an input 10u for selecting an application from the list 2102 of applications is received, the controller 180 can transmit (or automatically write a posting) payment information corresponding to a payment item using the selected application as is shown in FIG. 21C. As such, one may be able to easily share a payment item with a different user.

FIG. 21C shows an example of automatically writing a posting using corresponding payment information when writing a posting using a selected application. Referring to FIG. 21C, the posting 2010 automatically incudes at least one of payment information including a payment amount 2014 such as ' 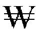 27,000', a payment item 2013 such as 'dackgalbi', a business name 2015 at which payment is made, or an address 2016 at which the payment is made.

Although the automatically written posting 2010 is able to be directly posted, the posting can be posted after being modified based on an additional modification command of a user.

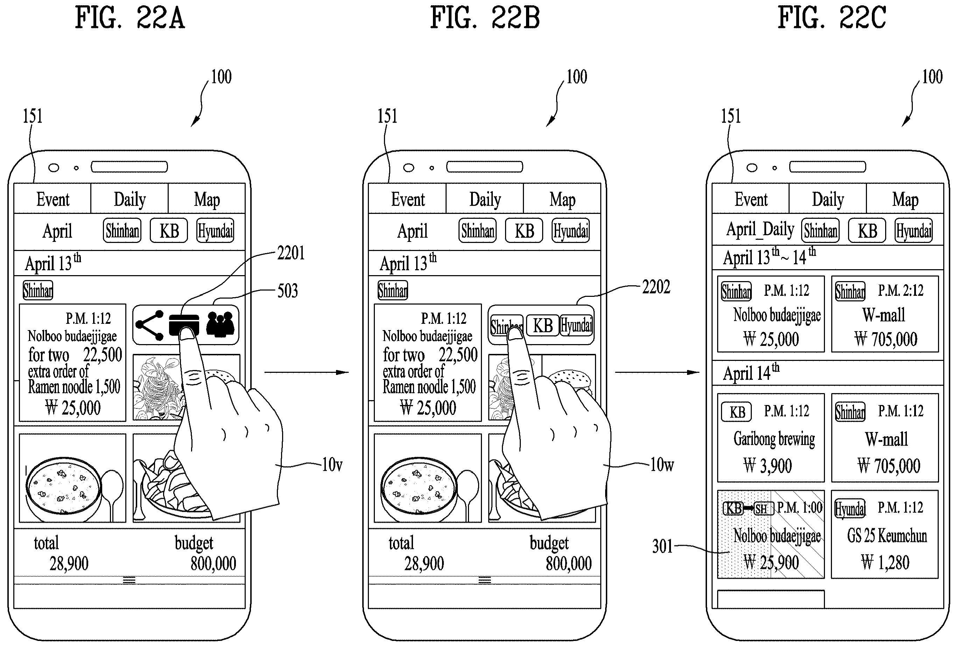

A control method of changing a payment means for an item of which payment is already completed is explained with reference to FIGs. 22A-22C, which are diagrams for a control method of sharing a payment breakdown with a different mobile terminal according to one embodiment of the present invention.

Referring to FIG. 22A, the controller 180 outputs an add button region 503 for a first payment item. If a payment means change button 2201 located at the add button region 503 is selected, as shown in FIG. 22B, the controller 180 can output a list 2202 of payment means used for selecting a payment means to be changed. If an input 10w for selecting a payment means from the list of payment means 2202 is received, the controller 180 can perform repayment (or it may be able to automatically transmit a repayment message to a card company) using the selected payment means. The controller 180 can also make payment means capable of performing repayment to be identified only in the list of payment means 2202 (e.g., payment means incapable of performing the repayment are represented by shadows).

If a repayment progress process is necessary, one embodiment further outputs the progress process on a payment item. Referring to FIG. 22C, consider that a repayment process for a prescribed payment item 301 is in progress on a list. In this case, as shown in FIG. 22C, the controller 180 divides the payment item 301 into equal parts and may be then able to display the progress process by changing color of each region of the equally divided parts (identical to the display of the aforementioned installment progress process).

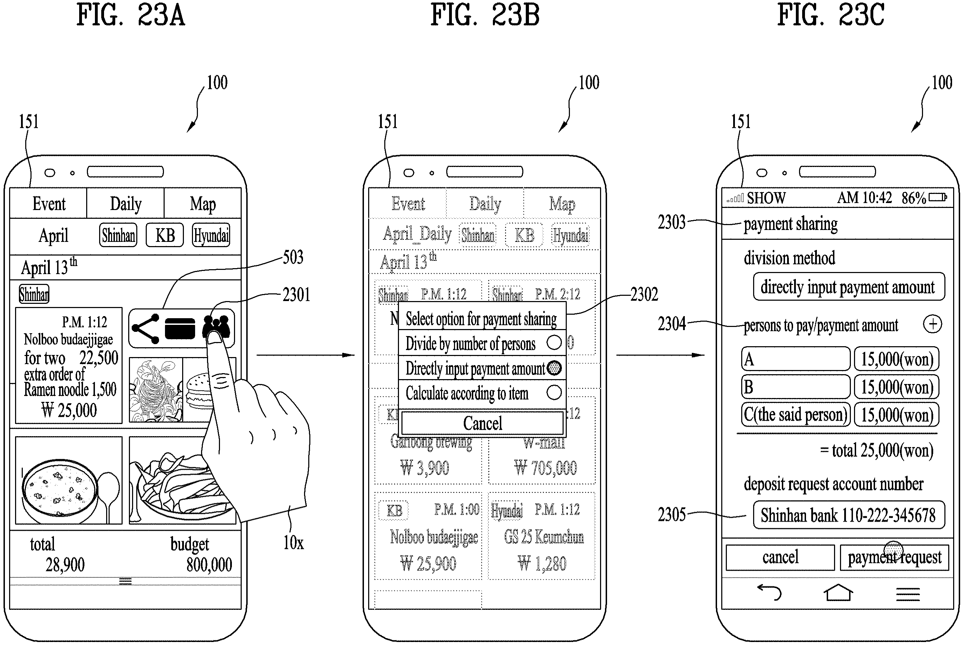

If a single person pays a bill, which should be divided by a plurality of persons, it is necessary to settle up the bill. This feature will be described in more detail with regard to FIGs. 23A-23C, which are diagrams for a control method of calculating an item of which payment is already completed in a manner of dividing the payment by a plurality of users according to one embodiment of the present invention.

Referring to FIG. 23A, if a payment sharing button 2301 located at an add button region 503 is selected 10x, as shown in FIG. 23B, the controller 180 can output a list of calculating methods for selecting a specific calculation option. A calculation option divides a prescribed amount of money. For instance, a method of dividing a prescribed amount of money by the number of persons, a method of dividing a prescribed amount of money by an amount of money designated by a user and the like can be included in the calculation option.

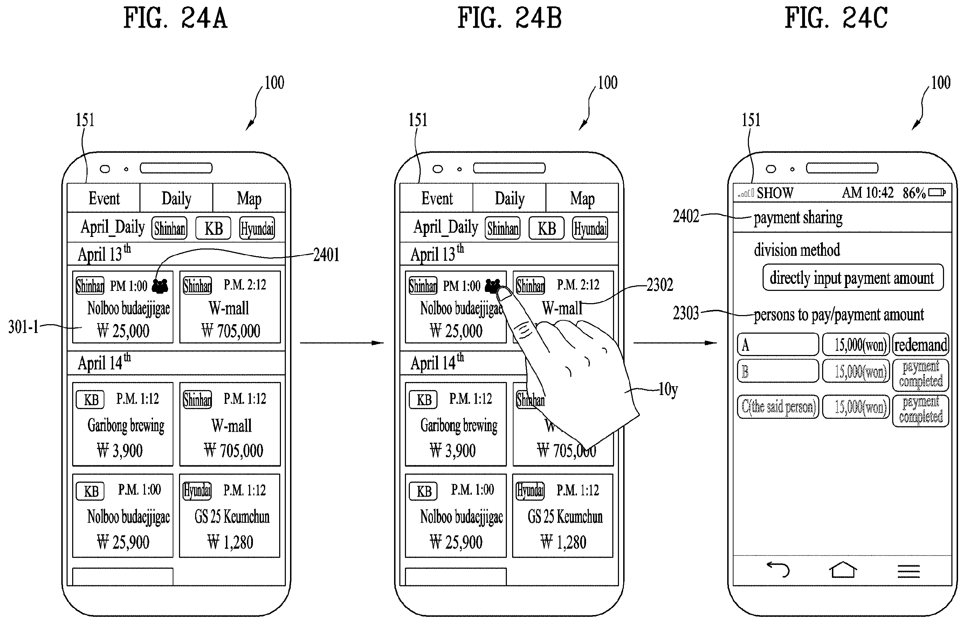

FIG. 23C is an example of a screen 2303 transmitting a calculation payment request. Referring to the calculation payment request screen 2303, the controller 180 can output a region 2304 for configuring persons to pay and payment amount of each of the persons. The controller 180 can output a region 2305 capable of receiving an input of a bank account to enable each person to transfer a corresponding amount of money. If 'payment request' is selected after inputs and configurations for the regions are completed, the controller 180 automatically makes a request message for payment sharing and may be able to transmit the request message to a corresponding counterpart. A management method performed after a payment sharing is requested will be described with reference to FIGs. 24A-24C

FIGs. 24A-24C are diagrams for a control method of managing payment sharing according to one embodiment of the present invention.

Referring to FIG. 24A, a plurality of payment items are outputted on a list and consider that payment sharing is requested for a first payment item. In this case, one embodiment further displays a payment sharing indicator 2401 on the payment item to indicate a state that the payment sharing is requested.

As shown in FIG. 24B, if the payment sharing indicator 2401 is selected 10y, the controller 180 can output a payment sharing screen 2402 including a state 2403 (paid/unpaid) that a payment sharing is currently performed (FIG. 24C. If a reconfirm button is further outputted for a person who has not paid yet and the reconfirm button is selected, a text or other message can be automatically transmitted to the person to make a request for payment sharing again.

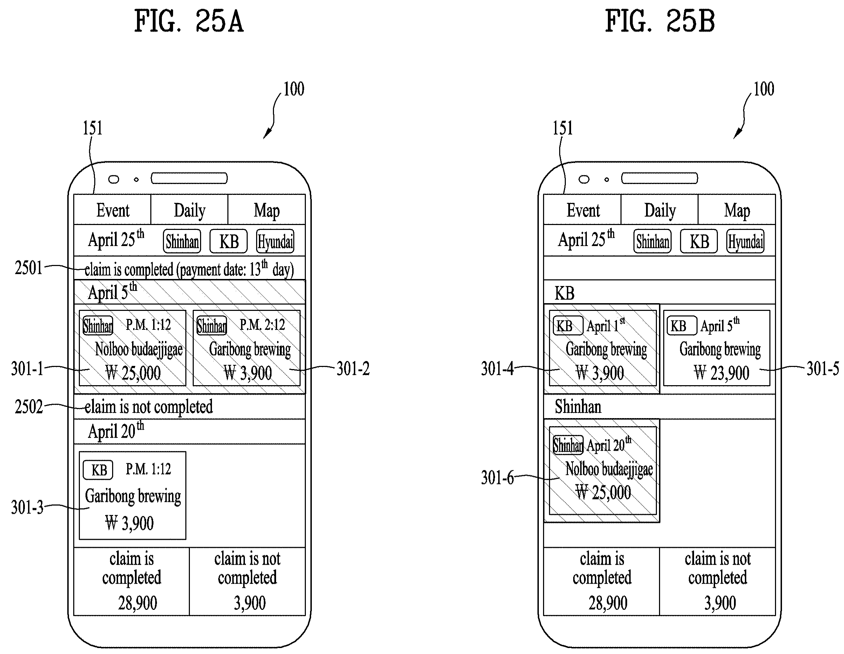

FIGs. 25A-25B are diagrams for payment request information on a payment information list according to one embodiment of the present invention. When a payment is made using a credit card, a card company can charge a user for an actual amount of money corresponding to a card payment amount on a predetermined date of every month. The user may intend to check a payment item of which a claim is completed and a payment item of which a claim is not completed on the payment information list.

FIG. 25A shows a method of outputting a payment item of which a claim is completed and a payment item of which a claim is not completed among payment items of a corresponding month when a payment date has elapsed on the basis of a current date.

First of all, although it is not depicted in FIG. 25A, when the list of payment information mentioned earlier in FIG. 3A is outputted on a touch screen 151, the controller 180 can receive an input signal. For instance, the list of the payment information can include a first payment item to a third payment item 301-1, 301-2, 301-3. In this case, the input signal may correspond to a touch input inputted on a button for outputting payment claim information.

The controller 180 can then determine whether to actually claim a payment item in response to the input signal. In this case, whether to actually claim a payment item may correspond to whether a user of a mobile terminal has actually paid money corresponding to a payment amount to a card company.

As shown in FIG. 25A, the controller 180 can separately output a payment item of which a claim is completed and a payment item of which a claim is not completed. More specifically, the controller can output at least one of the payment items of which the claim is completed and the payment item of which the claim is not completed based on a date on which a touch input inputted on a button for outputting payment claim information is received. For instance, in the embodiment of FIG. 25A, consider the scenario that a payment date for a payment amount corresponds to a 13^{th} day of every month. In this case, the controller 180 can output a claim completion indicator 2501 for a first payment item 301-1 and a second payment item 301-2 of which a claim is completed. For instance, the claim completion indicator 2501 can include a graphic effect making the payment items of which the claim is completed to be dark. The controller 180 can then output a claim incompletion indicator 2502 for a third payment item 301-3 of which a claim is not completed.

FIG. 25B shows a method of outputting a payment item of which a claim is completed and a payment item of which a claim is not completed among payment items of a corresponding month on the basis of a card company.

In this case, as shown in FIG. 25B, the controller 180 can output a payment item of which a claim is completed and a payment item of which a claim is not completed according to a card company on the basis of a current date. The controller 180 can also distinguish the payment item of which the claim is completed from the payment item of which the claim is not completed in a manner of providing a graphic effect making the payment item of which the claim is completed to be dark. As shown in FIG. 25B, in the case of a KB card, although a fourth payment item 301-4 is in a state of which a claim is completed, a fifth payment item 301-5 may be in a state of which a claim is not completed. The state of which the claim is not completed may correspond to a state that a payment date has not elapsed or a state that a balance is insufficient on a payment date although the payment date elapsed.

As shown in FIG. 25B, a sixth payment item 301-6 may be in a state of which a claim is completed.

Advantageous effects of a mobile terminal according to the present invention and a method of controlling therefor are described in the following.

According to at least one or more the embodiments of the present invention, a user can easily check a payment breakdown paid by a credit card or a mobile terminal.

According to at least one or more the embodiments of the present invention, it is able to provide additional information on a payment to a user to enable the user to easily recall a breakdown of the old payment.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments. As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### Further List of Embodiments of the Invention

A mobile terminal may comprise: a touchscreen; a memory configured to store a plurality of payment items; and a controller configured to: cause the touchscreen to display a list of the plurality of payment items stored in the memory; and cause the touchscreen to switch the displaying of a first payment item of the list to display a first display object in response to a received user input, wherein the first display object comprises tag information that corresponds to tag information of the first payment item.

Each of the plurality of payment items may comprise at least one of a payment amount, a date and time on which a payment is made, a location at which a payment is made, a business name at which a payment is made, or information on a type of business at which a payment is made.

The first display object may comprise image data captured on a date and time corresponding to a date and time on which a payment of the first payment item is made.

The controller may further be configured to: cause the touchscreen to display a thumbnail image of the image data in a region of the touchscreen at which the first payment item is displayed.

The controller may be configured to: cause the touchscreen to display a selected one of the payment amount, the date and time on which the payment is made, the location at which the payment is made, the business name at which the payment is made, or the information on the type of business at which the payment is made.

The first display object may comprise a call history for a date and time corresponding to a date and time on which a payment of the first payment item is made.

The first display object may comprise coupon information for using at a location at which a payment of the first payment item is made.

The list may be switched among a daily payment list, a weekly payment list, and a monthly payment list, in response to user input.

The controller may further be configured to: cause the touchscreen to display a date distinction region for distinguishing the plurality of payment items from each other according to payment date associated with each of the plurality of payment items; cause the touchscreen to display a search word input window in response to a drag input beginning at the date distinction region and extending upward or downward; and perform a search using a date corresponding to the date distinction region as an end point or a start point of a search section when a search word is input via the search word input window.

The controller may further be configured to: cause the touchscreen to display a total payment amount corresponding to payment items, among the plurality of payment items, associated with a selected at least two or more date distinction regions, in response to an input selecting the at least two or more date distinction regions.

The controller may further be configured to: cause the touchscreen to display payment request information indicating whether an amount of money corresponding to a payment amount of the first payment item of the list has been paid.

A display method for a mobile terminal having a touchscreen, the method may comprise: storing in a memory a plurality of payment items; displaying, on the touchscreen, a list of the plurality of payment items stored in the memory; and switch the displaying of a first payment item of the list to displaying of a first display object in response to a received user input, wherein the first display object comprises tag information that corresponds to tag information of the first payment item.

Each of the plurality of payment items may comprise at least one of a payment amount, a date and time on which a payment is made, a location at which a payment is made, a business name at which a payment is made, or information on a type of business at which a payment is made.

The first display object may comprise image data captured on a date and time corresponding to a date and time on which a payment of the first payment item is made.

The method may further comprise: cause the touchscreen to display a thumbnail image of the image data in a region of the touchscreen at which the first payment item is displayed.

The method may further comprise: displaying, on the touchscreen, a selected one of the payment amount, the date and time on which the payment is made, the location at which the payment is made, the business name at which the payment is made, or the information on the type of business at which the payment is made.

The first display object may comprise a call history for a date and time corresponding to a date and time on which a payment of the first payment item is made.

The first display object may comprise coupon information for using at a location at which a payment of the first payment item is made.

The list may be switched among a daily payment list, a weekly payment list, and a monthly payment list, in response to user input.

The method may further comprise: displaying, on the touchscreen, a date distinction region for distinguishing the plurality of payment items from each other according to payment date associated with each of the plurality of payment items; displaying, on the touchscreen, a search word input window in response to a drag input beginning at the date distinction region and extending upward or downward; and performing a search using a date corresponding to the date distinction region as an end point or a start point of a search section when a search word is input via the search word input window.

The method may further comprise: displaying, on the touchscreen, a total payment amount corresponding to payment items, among the plurality of payment items, associated with a selected at least two or more date distinction regions, in response to an input selecting the at least two or more date distinction regions.

The method may further comprise: displaying, on the touchscreen, payment request information indicating whether an amount of money corresponding to a payment amount of the first payment item of the list has been paid.

## Claims

1. A mobile terminal, comprising:
a touchscreen;
a memory configured to store a plurality of payment items; and
a controller configured to:
cause the touchscreen to display a list of the plurality of payment items stored in the memory; and
cause the touchscreen to switch the displaying of a first payment item of the list to display a first display object in response to a received user input, wherein the first display object comprises tag information that corresponds to tag information of the first payment item.

2. The mobile terminal of claim 1, wherein each of the plurality of payment items comprise at least one of a payment amount, a date and time on which a payment is made, a location at which a payment is made, a business name at which a payment is made, or information on a type of business at which a payment is made.

3. The mobile terminal of claim 2, wherein the first display object comprises image data captured on a date and time corresponding to a date and time on which a payment of the first payment item is made.

4. The mobile terminal of claim 3, wherein the controller is further configured to:
cause the touchscreen to display a thumbnail image of the image data in a region of the touchscreen at which the first payment item is displayed.

5. The mobile terminal of claim 2, wherein the controller is configured to:
cause the touchscreen to display a selected one of the payment amount, the date and time on which the payment is made, the location at which the payment is made, the business name at which the payment is made, or the information on the type of business at which the payment is made.

6. The mobile terminal of claim 2, wherein the first display object comprises a call history for a date and time corresponding to a date and time on which a payment of the first payment item is made.

7. The mobile terminal of claim 2, wherein the first display object comprises coupon information for using at a location at which a payment of the first payment item is made.

8. The mobile terminal of any one of claims 1 to 7, wherein the list is switched among a daily payment list, a weekly payment list, and a monthly payment list, in response to user input.

9. The mobile terminal of any one of claims 1 to 8, wherein the controller is further configured to:
cause the touchscreen to display a date distinction region for distinguishing the plurality of payment items from each other according to payment date associated with each of the plurality of payment items;
cause the touchscreen to display a search word input window in response to a drag input beginning at the date distinction region and extending upward or downward; and
perform a search using a date corresponding to the date distinction region as an end point or a start point of a search section when a search word is input via the search word input window.

10. The mobile terminal of any one of claims 1 to 9, wherein the controller is further configured to:
cause the touchscreen to display a total payment amount corresponding to payment items, among the plurality of payment items, associated with a selected at least two or more date distinction regions, in response to an input selecting the at least two or more date distinction regions.

11. The mobile terminal of any one of claims 1 to 10, wherein the controller is further configured to:
cause the touchscreen to display payment request information indicating whether an amount of money corresponding to a payment amount of the first payment item of the list has been paid.

12. A display method for a mobile terminal having a touchscreen, the method comprising:
storing in a memory a plurality of payment items;
displaying, on the touchscreen, a list of the plurality of payment items stored in the memory; and
switch the displaying of a first payment item of the list to displaying of a first display object in response to a received user input, wherein the first display object comprises tag information that corresponds to tag information of the first payment item.

13. The method of claim 12, wherein each of the plurality of payment items comprise at least one of a payment amount, a date and time on which a payment is made, a location at which a payment is made, a business name at which a payment is made, or information on a type of business at which a payment is made.

14. The method of claim 13, wherein the first display object comprises image data captured on a date and time corresponding to a date and time on which a payment of the first payment item is made.

15. The method of claim 13, further comprising:
displaying, on the touchscreen, a selected one of the payment amount, the date and time on which the payment is made, the location at which the payment is made, the business name at which the payment is made, or the information on the type of business at which the payment is made.
